# EUROPEAN PATENT APPLICATION

(11) **EP 4 557 262 A2**
(43) Date of publication of application: **21.05.2025**
(21) Application number: 24212596.1
(22) Date of filing: 13.11.2024
(51) Int. Cl.: G08G 5/51, G08G 5/24, G08G 5/265

(54) **INTERACTIVE STRATEGIC AND TACTICAL GUIDANCE SYSTEM FOR AIRCRAFT GROUND OPERATIONS**

(30) Priority: 20.11.2023 US 202318514600
(71) Applicant: Rockwell Collins, Inc., Cedar Rapids, IA 52498 (US)
(72) Inventor: MATESSA, Michael P., Ben Lomond, CA, 95005 (US); RADEMAKER, Richard M., Cedar Rapids, IA, 52402 (US); LAHR, Weston J., Sherwood, OR, 97140 (US)
(74) Representative: Dehns

(57) **Abstract**

An aircraft-based strategic and tactical interactive guidance system for ground operations includes position sensors (314a, b, c) for determining position information of an aircraft engaged in taxi operations (e.g., gate to takeoff, touchdown to gate) at an airport. The guidance system stores airport database information about runways, taxiways, hazards, gates, and other airport features. The guidance system analyzes and parses verbal taxi instructions from the airport control facility, into a navigation path. The guidance system fuses the navigation path with the airport database information and the aircraft's position information to present, via an interactive display surface, a strategic display, e.g., providing an overhead view of the current aircraft position, its assigned gate or destination, and the navigation path incorporating the prescribed runways and/or taxiways via which the aircraft will reach said destination. The pilot may modify the displayed navigation path via the interactive display surface.

## Description

### BACKGROUND

Over the next two decades, pilot retirements mean some 200,000 new pilots may be needed to keep up with current airline industry growth. As pilot shortages mount, more demand is placed upon pilots for ground taxiing operations in particular. Whether from gate to takeoff or from touchdown to gate, rapid and safe taxiing operations are essential, particularly at high-traffic commercial airports. In such airport environments, burdened pilots need optimal situational awareness and alerting to unexpected obstacles along the taxiways. Commercial aircraft provide a unique challenge with respect to obstacle tracking; for example, a taxiing aircraft contacts the ground and steers via its landing gear, but the movement of landing gear while taxiing affects the rest of the aircraft superstructure, including tail, wings and/or other extending from the fuselage, in sometimes unpredictable ways.

### SUMMARY

In an aspect, a strategic and tactical interactive guidance system for aircraft-based ground operations (e.g., taxi operations) is disclosed. In embodiments, the strategic and tactical guidance system includes aircraft-based position sensors for determining position information of an aircraft engaged in ground-based taxi operations (e.g., gate to takeoff, touchdown to gate) at an airport. The guidance system includes memory or data storage for up-to-date airport databases including the airport at which the aircraft is currently operating and providing detailed information as to runways, taxiways, hazards, gates, and other airport features. The guidance system receives aural/verbal taxi instructions from the airport control facility, e.g., indicating a gate and directions for reaching said gate via a combination of runways and/or taxiways, analyzing and parsing the aural instructions into a navigation path corresponding to the instructions. The strategic and tactical guidance system fuses the navigation path with airport database information and the aircraft's own position information to present, via an interactive display surface, to the aircraft pilot and crew an interactive strategic display, e.g., providing an overhead view of the current aircraft position, its assigned gate or destination, and the navigation path incorporating the prescribed runways and/or taxiways via which the aircraft will reach said destination. The pilot or crew may modify the displayed navigation path (e.g., if the taxi instructions were erroneously parsed, or to add a stop/hold) via the interactive display surface.

In some embodiments, the navigation path presented by the strategic display is approved by airport ground control and is displayed to indicate its approved status (e.g., in an approved color). If, for example, the pilot modifies a portion of the navigation path, the strategic display may present the modified portion in a different color so long as the modified portion is not approved by ground control.

In some embodiments, the strategic and tactical guidance system forwards the proposed modification to airport ground control for approval.

In some embodiments, the strategic and tactical guidance system receives approval of the modified portion of the navigation path from ground control, whereby the strategic display presents the modified portion of the navigation path in the approved color.

In some embodiments, modification of the navigation path includes the addition or stop or hold point, which the strategic display presents in the appropriate point within the navigation path.

In some embodiments, the aircraft-based sensors include aircraft component sensors attached to wingtips, landing gear, and/or other external aircraft components and providing position data for their respective components. The strategic and tactical guidance system generates a tactical display by fusing the navigation path and airport database information with component position data, and presents via the tactical display a navigation path incorporating dedicated component paths which indicate or predict the movement or position of each component (e.g., relative to the position of the aircraft proper). The tactical display may be presented to the pilot via an interactive display surface allowing for pilot modification thereof.

In some embodiments, external components to which sensors may be attached include aircraft wingtips or wings as well as the aircraft landing gear.

In some embodiments, dedicated component paths tracking the position and/or movement of different aircraft components are presented by the tactical display in different colors, e.g., one color for landing gear, a second color for wingtips.

In some embodiments, the tactical display presents the positions of obstacles, impassable terrain, and/or other aircraft fixtures and features relative to the navigation path of the aircraft and/or the component paths for its external components.

In some embodiments, the tactical display presents obstacles and/or impassable terrain in a different color than external component paths.

In some embodiments, the strategic and tactical guidance system provides aural warnings corresponding to obstacles and/or impassable terrain in the tactical display.

In some embodiments, the tactical display includes explanatory symbology for displayed airport features.

In some embodiments, the tactical display includes a partially overhead and/or fully overhead view of the aircraft.

In some embodiments, the pilot can toggle the interactive display surface between the strategic and control displays, e.g., via interaction with the display surface.

In some embodiments, the strategic and tactical guidance system simultaneously presents the strategic and tactical displays via a single display surface divided between the two displays.

In some embodiments, the strategic and tactical guidance system includes separate interactive display units respectively dedicated to the strategic and tactical displays.

In some embodiments, the pilot enters (e.g., via the interactive display surface) a desired parking position and desired parking orientation of the aircraft, e.g., at the gate or a stand marking).

In some embodiments, the strategic and tactical guidance system calculates a parking path terminating at the desired parking position and orientation. The parking path is incorporated into the navigation path and into path information presented by the strategic and tactical displays.

In some embodiments, the strategic and tactical guidance system forwards the parking path to an automatic parking system of the aircraft for execution.

In some embodiments, the strategic and tactical guidance system fails to generate a parking path, and the interactive display unit presents error messages (e.g., visual and/or aural) to the pilot and crew indicative of the failure to do so.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic illustration of a display unit of an interactive strategic and tactical guidance system for an aircraft pilot or operator according to example embodiments of this disclosure;
FIG. 2 is a diagrammatic illustration of the display unit of FIG. 1 subsequent to approved modification of strategic display;
FIG. 3 is a block diagram illustrating the interactive strategic and tactical guidance system of FIG. 1;
FIGS. 4A and 4B are diagrammatic illustrations of a tactical display of the interactive strategic and tactical guidance system of FIG. 1;
and FIG. 5 is a diagrammatic illustration of parking assistance operations of the interactive strategic and tactical guidance system of FIG. 1.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Embodiments of the inventive concepts disclosed herein are directed to an interactive strategic and tactical guidance system that provides low-workload enhanced situational awareness for pilots and/or operators engaged in ground taxi operations, e.g., from gate to takeoff or from touchdown to gate. The strategic and tactical guidance system processes and displays tower instructions via an interactive strategic visual display that presents a navigation path corresponding to the tower instructions, and allows pilots to modify the navigation path if needed. Further, any pilot modifications to the navigation path may be automatically forwarded to ground control for approval without further action on the part of the pilot. In some embodiments, the strategic and tactical guidance system provides additional situational awareness via a tactical display alerting the pilot to obstacles or hazards on the taxiways. Further still, the strategic and tactical guidance system may provide interactive parking assistance at the gate, seamlessly integrated with the navigation path.

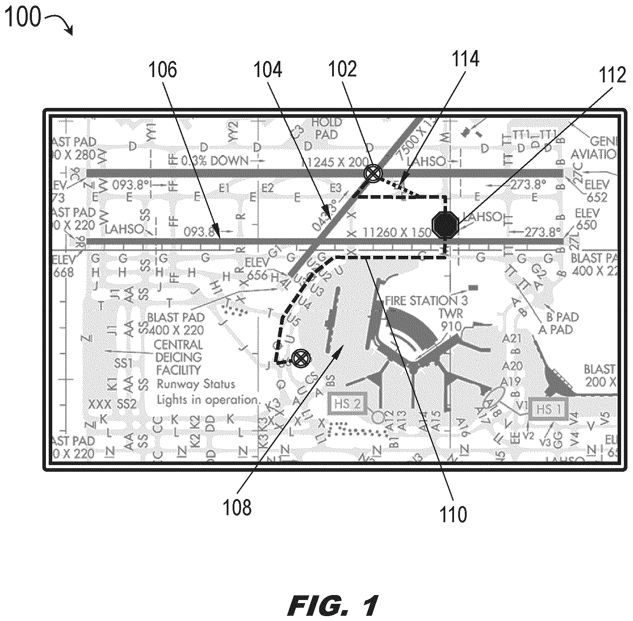

Referring in particular to FIG. 1, a strategic display 100 of the strategic and tactical guidance system is shown.

In embodiments, the strategic display 100 may be presented by, e.g., an aircraft-based/cockpit-based interactive display unit or mobile/portable display device having one or more interactive display surfaces. For example, the strategic display 100 may be based on, as described in greater detail below, parsing and/or translation of verbal ground guidance instructions from ground control facilities into visual guidance data and fusion of the visual guidance data with positioning data sensed aboard the aircraft.

In embodiments, the strategic display 100 may be embodied in an aircraft engaged in ground operations at a particular airport. For example, the aircraft may maintain a current airport database, e.g., frequently updated and highly detailed maps of airports at which the aircraft is currently operating or will operate and including the positions and orientations of runways, taxiways, gates, aprons, fixtures, and/or other airport features. In embodiments, the strategic display 100 may display an overhead map of the airport (e.g., perARINC 816 or like airport database information) at which the aircraft is operating based on, e.g., the aircraft's approved flight plan or positioning information. For example, the strategic and tactical guidance system may fuse aircraft positioning information (e.g., collected by aircraft positioning sensors) with airport database information stored to memory, as well as received and parsed taxi instructions, to determine and/or display a position of the aircraft relative to the airport, e.g., on a particular runway or taxiway, and a path from the relative position to an assigned gate or parking location.

In embodiments, upon landing at a particular airport, the aircraft may receive verbal taxi instructions from airport control facilities. For example, taxi instructions may outline a specific path for the aircraft to follow, e.g., from its touchdown point or current position to its assigned gate or apron parking. As shown by FIG. 1, taxi instructions issued to an aircraft at point 102 on runway 22R/4L (104) may include a sequence of instructions such as:
- turn left onto taxiway E;
- turn right onto taxiway M;
- hold short (e.g., per Land and Hold Short Operations (LAHSO)) of intersecting runway 27L/9R (106) until cleared to proceed (e.g., to allow aircraft to take off or land via the intersecting runway);
- proceed across the intersecting runway 106;
- turn right onto taxiway G;
- turn left onto taxiway Q;
- turn left onto, and enter the apron area 108 via, taxiway U6; and
- proceed to the assigned gate or apron parking area.

In embodiments, the strategic and tactical guidance system may perform speech recognition on received verbal instructions, cross-referencing the resulting text with ARINC 816 and airport database information to assemble and display a navigation path 110 via the strategic display 100. For example, the navigation path 110 may be displayed in an approved color (e.g., dashed line), indicating to the pilot that the navigation path is approved by ground control. Similarly, icons 112 may be displayed to indicate a LAHSO or stop/hold point. In embodiments, if the displayed navigation path 110 and the received taxi instructions align, the navigation path may be used for navigation to the gate or apron parking. For example, the pilot or operator may inspect the navigation path 110 to verify alignment and/or compliance with received taxi instructions. If the navigation path 110 does not align with the received taxi instructions, the pilot may inform the ground control facilities of the discrepancy. For example, a non-compliant navigation path 110 may instead be displayed in a non-approved color (e.g., dotted line).

In embodiments, the pilot may modify the displayed navigation path 110 via the interactive display unit. For example, the interactive display unit may be a touch-sensitive display surface allowing direct contact by the pilot with the displayed navigation path 110 and/or the underlying displayed airport information. In embodiments, if the displayed navigation path 110 does not align with received taxi instructions, or the pilot wishes to modify the navigation path for other reasons (e.g., to add a hold point), the pilot may drag the displayed navigation path to snap to the nearest alternate taxiway or runway and the strategic path may be recalculated. Further, a long press on the display surface may add a hold point and corresponding icon 112 at the location of the hold point. For example, the pilot may modify (114) the navigation path 110 to divert from the runway 104 to the taxiway E via taxiway E4. In embodiments, the modified portion 114 of the navigation path 110 may be displayed in a non-approved color (e.g., dotted line). However, the strategic and tactical guidance system may generate text or verbal instructions corresponding to the modified portion 114 and forward the generated instructions to ground control for approval of the modified portion.

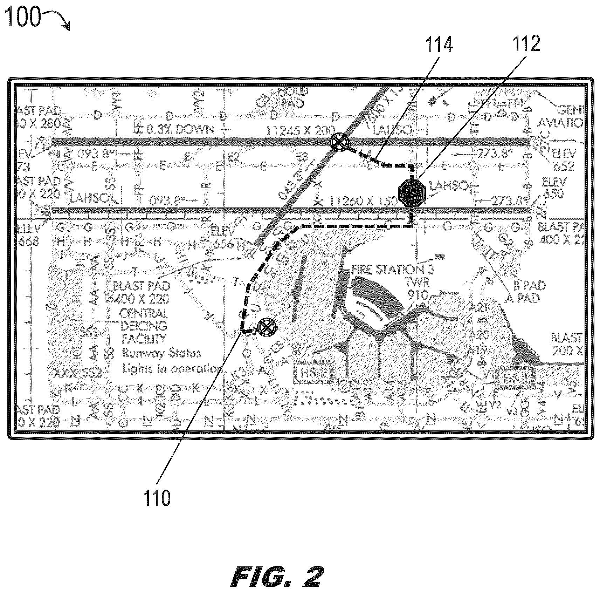

Referring also to FIG. 2, the strategic display 100 is shown.

In embodiments, ground control may notify the aircraft of the approval of the modified portion 114 of the navigation path 110. For example, the strategic and tactical guidance system may receive the notification of approval and respond by displaying the full navigation path 110, including the modified portion 114, in the approved color.

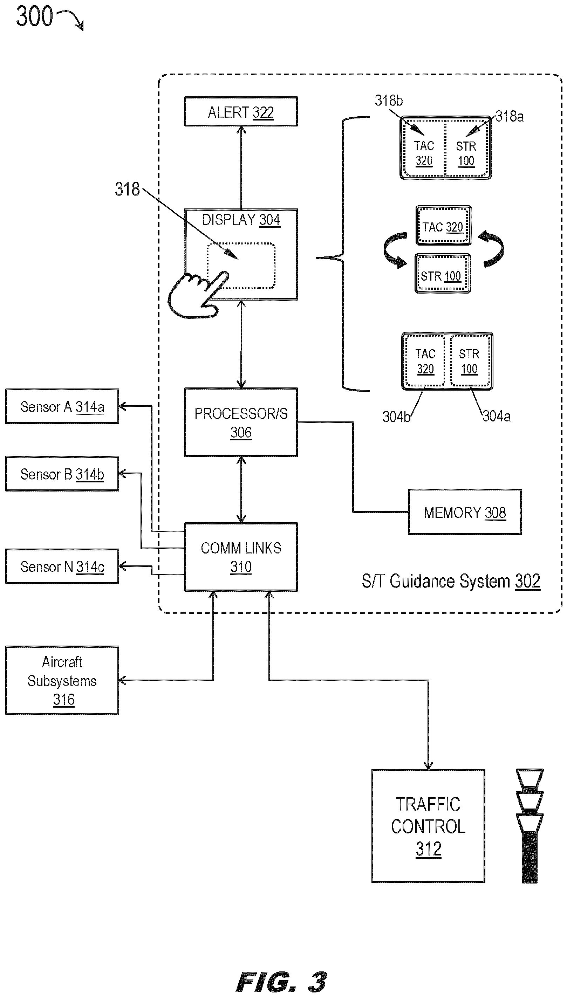

Referring to FIG 3, an aircraft 300 is shown. The strategic and tactical guidance system 302 may be embodied aboard the aircraft 300 and may include the interactive display unit 304, processor/s 306, memory 308, and communications links 310.

In embodiments, communications links 310 may include voice and/or datalinks connecting the strategic and tactical guidance system 302 to traffic control 312 at any airports at which the aircraft 300 is operating, as well as aircraft-based sensors 314a, 314b, ... 314c and aircraft subsystems 316 (e.g., automatic taxi (auto-taxi) systems and/or automatic parking systems, if the aircraft 300 is so equipped). For example, communications links 310 may exchange taxi instructions with traffic control 312, e.g., verbal instructions issued by traffic control to the aircraft 300, or requests to approve modified portions (114, FIG. 1) of a navigation path (110, FIG. 1) generated and presented by the strategic display 100.

In embodiments, communications links 310 may provide the processor/s 306 with positional information indicative of a position of the aircraft 300 or of one or more components thereof, as sensed by aircraft-based sensors 314a-314c. For example, aircraft-based sensors 314a may include positional sensors reporting a position of the aircraft 300, e.g., absolute position sensors compatible with satellite-based or other navigational systems and reporting an absolute position of the aircraft in an earth-centered reference frame (e.g., latitude, longitude, altitude).

In some embodiments, aircraft-based sensors 314a may include relative positional sensors reporting a relative position of the aircraft 300 relative to some other absolute position or reference frame, e.g., radar altimeters reporting an above-ground altitude of the aircraft, inertial measurement units (IMU) reporting a rotational or angular orientation of the aircraft (e.g., relative to yaw, pitch, and roll axes of the aircraft and to an origin orientation thereof).

In some embodiments, aircraft-based sensors may include component sensors 314b, 314c attached to external components of the aircraft 300 and reporting a position of the external component (e.g., a position specific to the component, as opposed to a position of the aircraft proper (or, for example, relative to the aircraft position)). For example, as also discussed below, component sensors may include wing-based or wingtip-based sensors 314b attached to a wingtip or wing of the aircraft 300 and reporting a position of the wingtip or wing, which may extend from the fuselage proper of the aircraft and may be at risk of encroaching or colliding with obstacles on the runway or taxiway not otherwise proximate to the fuselage. Similarly, component sensors may include landing gear-based sensors 314c attached to landing gear of the aircraft 300 and reporting a position and/or orientation of the landing gear.

In embodiments, the processors 306 may fuse positional information reported by the aircraft-based sensors 314a-314cwith airport database information (e.g., ARINC 816) stored to memory 308 to generate the navigation path 110 presented by the strategic display 100 via the interactive display unit/s 304. For example, the interactive display unit/s 304 may incorporate a touchscreen display surface 318 via which the pilot may provide control input (e.g., modifying the navigation path 110) by direct contact with the display surface as described above.

In embodiments, the interactive display unit/s 304 may present other displays in addition to the strategic display 100 shown by FIGS. 1 and 2. For example, as described in greater detail below, the strategic and tactical guidance system 302 may additionally or alternatively generate a tactical display 320. In embodiments, the interactive display unit/s 304 may, based on control input provided by the pilot (e.g., via the display surface 318), toggle between the strategic display 100 and the tactical display 320. In other embodiments, the interactive display unit/s 304 may simultaneously present two or more of the strategic display 100 and the tactical display 320, e.g., via multiple windows or subdivisions 318a, 318b of the display surface 318. In still other embodiments, the interactive display unit/s 304 may include separate display units or surfaces 304a, 304b respectively dedicated to the strategic display 100 and the tactical display 320.

In embodiments, the strategic and tactical guidance system 302 may generate, and the interactive display unit/s 304 may present alerts 322 to the pilot or operator when particular conditions are met. For example, the alerts 322 may include, in addition to displayed error messages. aural, haptic, or other non-visual alerts produced, e.g., when an obstacle is detected in the strategic path 110, as described in greater detail below.

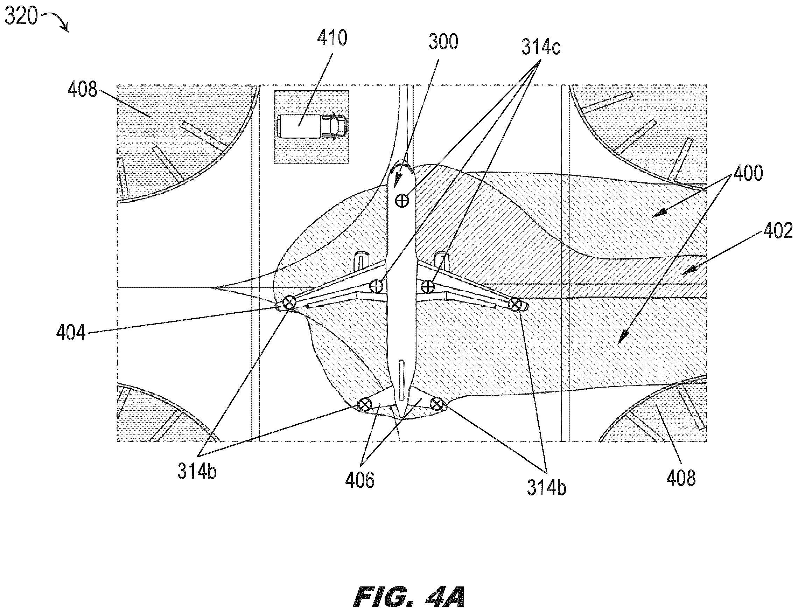

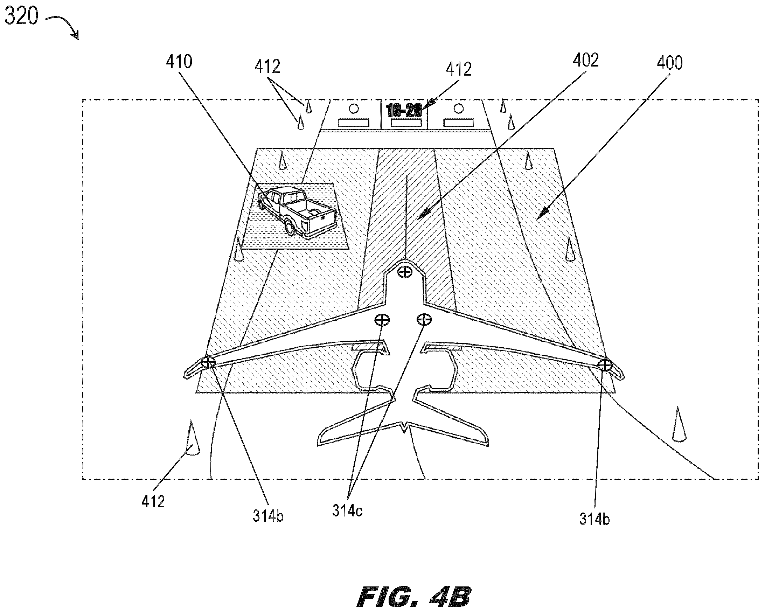

Referring now to FIGS. 4A and 4B, the tactical display 320 is shown.

In embodiments, the strategic and tactical guidance system (302, FIG. 3) may generate the tactical display 320 by fusing sensor data from the aircraft-based sensors 314a and component sensors 314b, 314c with airport database information to generate an overhead view of the aircraft 300 as the aircraft progresses along the navigation path (110, FIG. 1). For example, the aircraft-based sensors 314a and component sensors may include (but are not limited to) wingtip-based sensors 314b and/or landing gear sensors 314c as noted above, but may also include cameras and/or image sensors whose sensed imagery of the aircraft 300 and surrounding environment may be fused to generate a real-time overhead view of the aircraft, e.g., a fully overhead z-axis view of the aircraft as shown by FIG. 4A, or a partially overhead, partially forward view of the aircraft as shown by FIG. 4B. Accordingly, the tactical display 320 may likewise be based at least in part on the navigation path (110, FIGS. 1 and 2) presented by the strategic display (100, FIGS. 1 and 2) but smaller in scope, i.e., the tactical display may present only a portion of the navigation path, e.g., that portion in direct proximity to the current position of the aircraft 300.

In embodiments, based on positional information generated by the wingtip-based sensors 314b and/or landing gear sensors 314c, the strategic and tactical guidance system 302 may generate a wing navigation path 400 projecting the position and/or movement of the wingtips, a gear navigation path 402 projecting the position and/or movement of the landing gear, and/or other component navigation paths tracking the position and movement of external components of the aircraft 300, e.g., relative to the reported position of the aircraft 300 proper along the navigation path 110. For example, the aircraft 300 may be steered along the navigation path 110 (and may contact the runway or taxiway) via its landing gear; however, while the landing gear may follow a path closely aligning with the navigation path 110 (e.g., the navigation path may correspond to a centroid of the landing gear), other external components of the aircraft 300 (particularly those components distant from the landing gear or from the fuselage, such as the wingtips 404 or tail empennage 406) may follow paths not readily derivable from a glance at the navigation path. Further, the navigation path 110 may include impassable terrain 408 proximate to runways or taxiways, or obstacles 410 in the runways or taxiways. For example, while airport databases stored to memory 308 may indicate the locations of impassable terrain 408, obstacles 410 may include objects such as ground vehicles that, not being fixtures whose locations and/or dimensions are known to the airport database, the strategic display 100 may not account for.

In embodiments, the aircraft-based sensors (314a-314c, FIG. 3) may include proximity sensors for detecting and identifying obstacles 410 in the strategic path. For example, positional information with respect to obstacles 410 and airport database information with respect to impassable terrain 408 (as well as runway/taxiway information) may be fused with the wing and/or gear navigational paths 400, 402 to generate a tactical display 320 highlighting wing, gear, and other like component navigational paths in distinct colors and presenting impassable terrain and obstacles in a warning box (e.g., red). In some embodiments, aural alerts (322, FIG. 3) may be generated when obstacles 410 are detected.

In embodiments, the tactical display 320 may include surface guidance symbology 412. For example, surface guidance symbology 414 may indicate the locations of cones, stop/hold/LAHSO points, designations and/or orientations or runways and taxiways, and/or other airport database information which may be potentially helpful to the pilot but not always easily accessible via visual recognition. Further, as with the strategic display 100, the tactical display 320 may be modified via control input from the pilot; for example, the pilot may long press the interactive display surface (318, FIG. 3) to insert a stop/hold/LAHSO, whereby the appropriate icon (112, FIG. 1) will be added to the tactical display at that location.

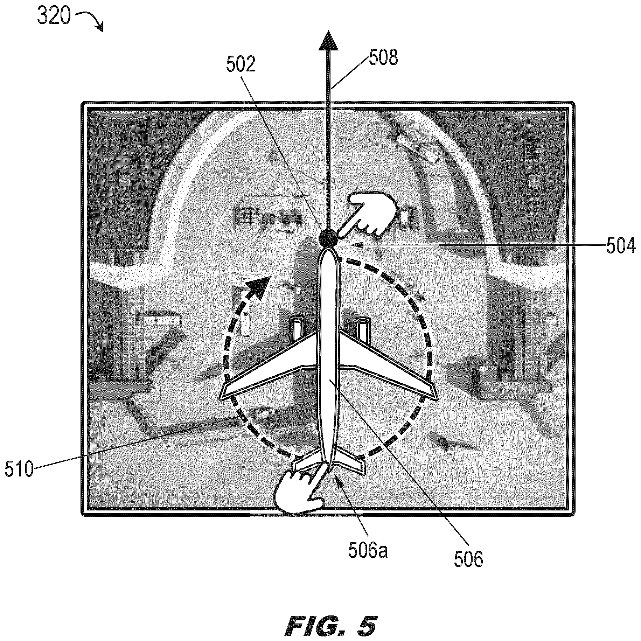

Referring now to FIG. 5, the strategic display 100 of the strategic and tactical guidance system (302, FIG. 3) is shown.

In embodiments, the strategic and tactical guidance system 302 may provide parking assistance functionality to extend the navigation path (110, FIG. 1) to a termination at a desired parking position and orientation, whether at the assigned gate or at an apron parking location. For example, the strategic path guidance system 302 may fuse airport database information with sensor imagery local to the operating airport to generate an overhead view of a parking site (e.g., an assigned gate, an apron parking location with one or more stand markings).

In embodiments, the pilot may indicate (e.g., via the strategic display 100) a desired nose position 502 via the interactive display surface (318, FIG. 3), e.g., by pressing the appropriate location on the screen. For example, the desired nose position 502 may correspond to the final position of the aircraft nosecone when the aircraft (300, FIG. 3) is parked and has come to a complete stop (e.g., corresponding to the appropriate stand marking 504). When the desired nose position 502 is selected, the strategic display 100 may display an aircraft icon 506, e.g., corresponding to the type and/or dimensions of the aircraft 300. In embodiments, the pilot may select a desired parking orientation 508 by rotating (510) the aircraft icon 506. For example, the pilot may point to and drag the tail 506a of the aircraft icon to select the appropriate desired parking orientation 508, e.g., relative to a yaw axis or z-axis of the aircraft 300, relative to due north.

In embodiments, when a desired nose position 502 and desired parking orientation 508 have been selected by the pilot, the strategic and tactical guidance system 302 may calculate a parking path terminating in the selected position and orientation. For example, the strategic and tactical guidance system 302 may modify (e.g., and seek approval for) a current navigation path 110 to append the parking path such that the navigation path terminates at the selected desired nose position and desired parking orientation 502, 508. Similarly, the tactical display (320, FIGS. 4A and 4B) may incorporate the desired parking position and orientation 502, 508 and the parking path into detailed guidance presented to the pilot or operator along the navigation path 110.

In some embodiments, the generated parking path may be forwarded to an automated parking system (if the aircraft 300 is so equipped) for automated parking of the aircraft. In some embodiments, if the strategic and tactical guidance system 302 is unable to generate a parking path based on a selected desired nose position and desired parking orientation 502, 508, the strategic display 100 and/or tactical display 320 may present an error message. For example, the error message may be incorporated into either the strategic display 100 and/or the tactical display 320, and may further include an aural alert (322, FIG. 3).

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An interactive guidance system for aircraft-based ground operations, comprising:
a plurality of aircraft-based sensors (314a, b, c), each aircraft-based sensor configured to provide ground position information of an aircraft relative to an airport;
a memory (308) configured to store at least one airport database corresponding to the airport;
at least one processor (306) coupled to the memory (308) and to the plurality of aircraft-based sensors (314a, b, c), the at least one processor (306) configured to:
receive aural instructions from a control facility of the airport;
determine at least one navigation path based on analyzing the aural instructions, the navigation path including a current position of the aircraft, a destination of the aircraft, and at least one of a runway or a taxiway;
and
at least one interactive display unit coupled to the at least one processor (306), the at least one interactive display unit configured to:
generate at least one strategic display by fusing the ground position information and the navigation path with airport information based on the at least one airport database;
present the at least one strategic display to at least one operator of the aircraft via an interactive display surface;
and
receive control input from an operator of the aircraft;
and
wherein, based on the received control input:
the at least one processor (306) is configured to modify the navigation path;
and
the at least one interactive display unit is configured to modify the at least one strategic display.

2. The interactive guidance system of Claim 1, wherein:
the navigation path is an approved navigation path;
wherein the modified navigation path includes at least one modified portion based on the received control input;
wherein the at least one strategic display presents the approved navigation path in an approved color;
and
wherein the at least one strategic display presents the at least one modified portion in a non-approved color.

3. The interactive guidance system of Claim 2, wherein the at least one processor (306) is configured to request approval of the at least one modified portion from the control facility.

4. The interactive guidance system of Claim 3, wherein:
the at least one processor (306) is configured to:
receive approval of the at least one modified portion from the control facility;
and
wherein the at least one strategic display presents the at least one approved modified portion in the approved color.

5. The interactive guidance system of any preceding Claim, wherein:
the at least one processor (306) is configured to modify the navigation path by adding at least one of a stop or a hold;
and
wherein the at least one strategic display includes the stop or hold.

6. The interactive guidance system of any preceding Claim, wherein:
the plurality of aircraft-based sensors (314a, b, c) includes at least one external sensor configured to provide component position information corresponding to an external component of the aircraft;
wherein the at least one processor (306) is configured to generate a tactical display by fusing the component position information provided by the at least one external sensor and the navigation path with the airport information;
wherein the tactical display includes a projection of at least one of a future location of the external component or a future movement of the external component;
and
wherein the at least one interactive display unit is configured to present the tactical display to the operator via the display surface.

7. The interactive guidance system of Claim 6, wherein the external component includes at least one of:
a wing or a wingtip of the aircraft;
or
landing gear of the aircraft.

8. The interactive guidance system of Claim 6, wherein:
the at least one external component includes a first external component and a second external component;
wherein the tactical display presents the projection of the first external component in a first color;
and
wherein the tactical display presents the projection of the second external component in a second color.

9. The interactive guidance system of Claim 6, wherein the tactical display includes at least one of:
an obstacle within at least one of the navigation path or the projection of the external component;
or
impassable terrain within at least one of the navigation path or the projection of the external component, and optionally wherein:
wherein the tactical display presents the projection of the external component in a first color;
and
wherein the tactical display presents the obstacle or the impassable terrain in a second color.

10. The interactive guidance system of Claim 9, wherein the interactive display unit is configured to announce at least one aural warning to the operator based on the obstacle or the impassable terrain.

11. The interactive guidance system of Claim 6, wherein the tactical display includes symbology based on the airport information, or wherein the tactical display includes at least one of:
a partial overhead view of the aircraft;
or
a fully overhead view of the aircraft.

12. The interactive guidance system of Claim 6, wherein the at least one interactive display unit is configured to toggle between the strategic display and the tactical display based on the received control input, or wherein the at least one interactive display unit is configured for simultaneous display of the strategic display and the tactical display, or wherein the at least one interactive display unit comprises:
a first interactive display unit configured for presentation of the strategic display;
and
a second interactive display unit configured for presentation of the tactical display.

13. The interactive guidance system of any preceding Claim, wherein:
the received control input includes a desired parking position and a desired parking orientation of the aircraft.

14. The interactive guidance system of Claim 13, wherein:
the at least one processor (306) is configured to generate a parking path from a current position and orientation of the aircraft to the desired parking position and orientation of the aircraft;
and wherein the at least one interactive display unit is configured to present the parking path to the operator via at least one of the strategic display or the tactical display, and optionally wherein:
the at least one processor (306) is configured to forward the parking path to an automatic parking system of the aircraft.

15. The interactive guidance system of Claim 13, wherein:
the at least one processor (306) fails to generate a parking path from the current position and orientation to the desired parking position and orientation of the aircraft;
and
wherein the interactive display unit is configured to present an error message associated with the failure to generate a parking path to the operator via the display surface.
